(19) Europäisches Patentamt
European Patent Office
Office européen des brevets

(11) **EP 3 103 763 A1**

(12) **EUROPEAN PATENT APPLICATION**

(43) Date of publication:
**14.12.2016 Bulletin 2016/50**

(51) Int Cl.:
**B82Y 30/00** (2011.01)     **G01B 7/16** (2006.01)

(21) Application number: **15171419.3**

(22) Date of filing: **10.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ETH Zurich**
**8092 Zurich (CH)**

(72) Inventors:
• **LARMAGNAC, Alexandre**
  **8038 Zurich (CH)**
• **Stauffer, Flurin**
  **8432 Wernetshausen (CH)**
• **Martinez, Vincent**
  **8002 Zurich (FR)**
• **Forro, Csaba**
  **8051 Zurich (CH)**
• **Klas, Tybrandt**
  **8005 Zurich (SE)**
• **VÖRÖS, Janos**
  **8050 Zurich (CH)**

(54) **COMPOSITE STRUCTURE**

(57)     The invention relates to a composite structure (1) comprising a stretchable, insulating support element (2) and one or more electrically conductive tracks (10), wherein the conductivity of each track (10) is or at least approximates a given function of a deformation of the composite structure (1). The composite structure (1) can e.g. be used in stretchable electronics, e.g. where the given function is locally constant, or in strain-sensors, e.g. where the given function changes for at least some deformations.

Figure 3a

Figure 3

Figure 3b

**Description**

The invention relates to a composite structure comprising

- a stretchable support element, and
- electrically conducting tracks supported by the support element.

Stretchable - and optionally transparent - electrically conductive materials will enable the development of novel devices for everyday life, including flexible thin-film solar cells, conformal electronics like foldable displays and smart textiles for personalized healthcare.

An emerging new class of stretchable conductive materials based on buckled nano-ribbons, microcracked gold thin films, liquid metals, graphene, carbon nano-tubes, metal particles, metal nano-wires and combinations of these represent new alternatives for enabling highly conductive materials that are deformable up to hundreds of percent. Strain sensor approaches based on these materials lack either stretchability, sensitivity or control.

Jien, Cao; Wang, Qian; Dai, Hongjie ("Electromechanical properties of metallic, quasi-metallic, and semiconducting carbon nano-tubes under stretching." In: Physical review letters 90.15 (2003): 157601) disclose piezoresistive strain sensors that can reach high gauge factors but are limited to small strain, have a high resistance, require cleanroom facilities and/or suffer from the lack of reproducibility.[1]

Michaud, Hadrien O.; Teixidor, Joan; Lacour, Stéphanie P ("Soft metal constructs for large strain sensor membrane." In: Smart Materials and Structures 24.3 (2015): 035020) disclose stretchable metal thin films with low resistances that have only limited gauge factor. Stretchable strain sensors based on elastomers with conductive fillers suffer from hysteresis behaviour because of rearrangement of the conductive fillers in the composite material.

It is therefore an object of the invention to create a composite structure of the type mentioned initially with improved properties.

These objects are achieved by a composite structure according to the independent claim.

This allows fabricating stretchable highly sensitive strain sensors or stretchable conductors with, for example, arbitrary tuneable resistance response to strain. Well-defined response to strain can, among others, allow creating stretchable electronics for sensing applications in integrated and/or automated portable devices.

In an embodiment it can be the case that a composite structure comprises a support element,

o the support element being stretchable, and
o the support element being insulating;

- a first and a second set of terminals for electrically contacting the composite structure,

o each set of terminals comprising one or more terminals; and

- one or more electrically conductive tracks for electrically connecting one or more terminals of the first set of terminals to one or more terminals of the second set of terminals,

o the tracks being supported by the support element, and
o an electrical conductivity of each track depending on a (first)conductivity function of a (mechanical) deformation of the support element,

■ a conductivity function being dependent on a (mechanical) deformation of the support element.

Such a composite structure can be used in **stretchable electronics,** e.g. where the conductivity function for at least one continuous deformation is at least locally flat, and/or for **strain-sensors,** e.g. where the conductivity function for at least one continuous deformation changes as a function of the deformation.

A **continuous deformation** is a family of deformations that continuously depend on at least one parameter. An example of a continuous deformation is a uniaxial stretching in one direction, where the at least one parameter is the amount of stretch.

A **state of deformation** can be described by a continuous deformation and a choice of its parameters. An example of a state of deformation is a uniaxial stretching in one direction by 100%.

**Strain** is a normalized measure of a state of deformation representing the displacement of material points in an object relative to a reference. A reference can e.g. be the location of the material points in an undeformed state.

An example of a deformation is **stretch**ing. An object can be stretched in one or multiple directions. In each direction stretching is a **uniaxial stretching** where the axis is the respective direction. Uniaxial stretching can be measured

by (uniaxial) **strain** $\varepsilon$, defined as $\varepsilon =(length_{after}- length_{before})/length_{before}$, where $length_{before}$ denotes the dimension in the direction before the deformation and $length_{after}$ denotes the dimension in the direction after the deformation. Strain is a unitless factor. Strain can also be expressed in **percentage.** E.g. a strain of $\varepsilon=0.5$ corresponds to a strain $\varepsilon$ of 50%

For each object and each direction there is a strain value, such that - when this strain value is applied in that direction - the object breaks (at -one or more locations). This strain shall be called the **stretching limit in that direction.** The minimum of the stretching limits over all directions shall be called the **stretching limit of the object.**

In an embodiment, it can be the case that for at least one direction d the support element's stretching limit $L_d$ in the *direction d* is $L_d >2\%$, in particular $L_d >5\%$ or $L_d >10\%$ or $L_d >20\%$ or $L_d >35\%$ or $L_d >50\%$ or $L_d >100\%$ or $L_d >200\%$ or $L_d >300\%$.

In an embodiment, it can be the case that the support element's stretching limit L of the support element is *L>2%,* in particular or *L>5%* or *L>10%* or *L>20%* or *L>35%* or *L>50%* or *L>100%* or *L>200%* or *L>300%.*

In an embodiment, it can be the case that the support element is elastically stretchable.

In an embodiment, it can be the case that the stretchable support element is electrically **insulating.**

In an embodiment, it can be the case that the electrical resistivity $\rho$ of the support element is $\rho > 10^2 \, \Omega m$ or $p> 10^6 \, \Omega m$ or $\rho> 10^8 \, \Omega m$ or $\rho> 10^{10} \, \Omega m$ or $\rho> 10^{12} \, \Omega m$ or $p> 10^{14} \, \Omega m$ or $\rho> 10^{18} \, \Omega m$ or $p> 10^{24} \, \Omega m$.

A **track** is a part of the structure that - for at least one state of deformation - forms a conductive path.

A track connects two or more terminals in the sense that for at least one state of deformation it forms a conductive path between at least two of the two or more terminals. A terminal can e.g. be an ending of the track, a point of connection of multiple tracks, or a contacting pad.

In an embodiment, it can be the case that a track is elongated.

The **conductivity** of a track can be measured in *S/cm*, where $S=1/\Omega$ denotes the unit Siemens and *cm* denotes centimetre. Conductivity is inverse to resistance. **Resistivity** can be measured in $\Omega m$, the normalized quantity **sheet resistance** can be measured in $\Omega/sq$.

In an embodiment, it can be the case that a track's conductivity depends on a function which depends on the applied deformation. The function is called the conductivity function (of the track).

In an embodiment, it can be the case that the conductivity function for at least one track is constant for at least a parameter-interval of at least one continuous deformation. For instance, it can be the case that the stretching limit for one direction is $L_d$ and that the conductivity function is constant on at least one interval *[a,b]* of the strain, where $0 \leq a < b \leq L_d$ and where |*b-a*|> *5%*, in particular where |*b-a*|> *10%, 20%, 50%* or *100%.*

In an embodiment, it can be the case that the conductivity function for at least one track is substantially constant for at least a parameter-interval of at least one continuous deformation. For instance, it can be the case that the stretching limit for one direction is $L_d$ and that the conductivity function is substantially constant on an interval *[a,b],* where $0 \leq a < b \leq L_d$ and where |*b-a*|> *5%*, in particular where |*b-a*|> *10%, 20%, 50%* or *100%.* For a substantially constant function, it can be the case that the substantially constant function differs from a constant function by less than *½,* in particular less than *1/5, 1/10, 1/20* or *1/50,* of the maximal conductivity in the interval *[a,b].* For a substantially constant function, it can be the case that the substantially constant function differs from a constant function by less than *50 S/cm*, in particular by less than *20 S/cm* or by less than *10 S/cm* or by less than *5 S/cm* or by less than *1 S/cm* or by less than *0.5 S/cm* or by less than *0.1 S/cm.*

In an embodiment, it can be the case that the values of the conductivity function for at least one track substantially differ for at least two states of deformation. For instance, it can be the case that the stretching limit for one direction is $L_d$ and that two values f(x), f(y), where *0<x<y< $L_d$,* of the conductivity function differ by at least *100 S/cm,* in particular by at least *200 S/cm* or at least *500 S/cm* or at least *1000 S/cm* or at least *2000 S/cm* or at least *5000 S/cm.*

The **gauge factor** (GF) or the **sensitivity to strain** is defined as $(\Delta R/R_0)/\varepsilon$, where $R_0$ is an initial electrical resistance and $\Delta R=R- R_0$ is a change in resistance for a given applied strain $\varepsilon$. The gauge factor is unitless and can be negative, zero or positive. Where the absolute value of the gauge factor is small, the conductivity does not change much as the mechanical strain is applied. Where the gauge factor is high, the conductivity decreases significantly after the strain is applied. Where the gauge factor is small, i.e. negative and has a high absolute value, the conductivity increases significantly as the strain is applied.

In an embodiment, it can be the case that the gauge factor on an interval *[a,b],* where $0 \leq a < b \leq L_d$ and where |*b-a*|> *5%*, in particular where |*b-a*|> *10%, 20%, 50%* or *100%,* is small for every strain $\varepsilon$ in the interval *[a,b],* in particular smaller than 1 or smaller than 0.5 or smaller than 0.2 or smaller than 0.1 or smaller than 0.05 or smaller than 0.02 or smaller than 0.01. An embodiment with small gauge factor can e.g. be used for electronic parts that should work equally well when being deformed.

In an embodiment, it can be the case that the gauge factor on an interval *[a,b],* where $0 \leq a < b \leq L_d$ *and* where |*b-a*|> *5%*, in particular where |*b-a*|> *10%, 20%, 50%* or *100%,* is large for some strain $\varepsilon$ in the interval *[a,b],* in particular larger than 2 or larger than 5 or larger than 10 or larger than 20 or larger than 50 or larger than 100 or larger than 150 or larger than 1000. An embodiment with large gauge factor can e.g. be used for strain sensors and/or local strain sensors.

In an embodiment, it can be the case that a track comprises one or more trails, in particular two or more trails.

A trail is a system comprising two or more **conductive elements,** in particular a plurality of conductive elements, wherein

- the conductive elements are electrically conductive,
- the conductive element are supported by the support element, and
- for at least one state of deformation the trail galvanically connects two (or more) terminals (of the track).

In an embodiment, it can be the case that some or all of the electrically conductive elements have conductivities of larger than $10^2$ *S/m* or larger than $10^4$ *S/m* or larger than $10^6$ *S/m* or larger than $10^8$ *S/m.*

In an embodiment, it can be the case that a track comprises one or more trail, and at least one of the trails comprises at least two or more conductive elements, wherein at least two of the at least two or more conductive elements are arranged to move relative to each other when the support element is deformed.

In an embodiment, it can be the case that at least two conductive elements are arranged to physically touch for at least a first state of deformation.

In an embodiment, it can be the case that at least two conductive elements are arranged to physically touch for at least a first state of deformation and to not physically touch for at least a second state of deformation.

In an embodiment, it can be the case that at least two conductive elements are arranged to galvanically connect for at least a first state of deformation.

In an embodiment, it can be the case that at least two conductive elements are arranged to galvanically connect for at least a first state of deformation and to not galvanically connect for at least a second state of deformation.

In an embodiment, it can be the case that two or more conductive elements are arranged to form a **percolation structure,**

- a percolation structure being a cluster of conductive elements, where at least some of the conductive elements are (physically and/or electrically) connected and form (physically and/or electrically) connected components.

In an embodiment, it can be the case that a track comprises one or more trails, wherein each trail forms a percolation structure.

In an embodiment, it can be the case that the (physical and/or electrical) connectivity depends on the applied deformation.

In an embodiment, it can be the case that at least some conductive elements are arranged, so that at least some connections of the percolation structure (physically and/or electrically) open and/or close depending on the applied deformation.

In an embodiment, it can be the case that at least one conductive element is arranged so that only a portion of the conductive element's surface is attached to the support element, in particular the portion can be smaller than 80% or *70%* or *60%* or *50%* or *40%* or *30%* or *20%* or *10%* or 5% or 2% or *1%* of the conductive element's surface. It can be the case that more than 10%, in particular more than 20% or more than 30% or more than 40% or more than 50% or more than 75% or more than 90% or substantially all or all, of the conductive elements are arranged so that only a portion of the conductive elements' surface is attached to the support element.

When a conductive element is attached to the support element at a portion of the conductive element's surface, it can be the case that the relative position of a point in the support element and a point in the conductive element depends on the applied state of deformation.

Let the following example illustrate such behaviour:

The behaviour of the conductive elements can be modelled by assuming a conductive element to be a straight elongated element and attached at a very small portion of its surface, e.g. assume at the middle of the conductive element. Let $a_S$ be a point in the support element attached to a point $a_{EC}$ *in* the conductive element and $p_S$ be a point in the support element that, when no deformation is applied, is very close - i.e. a direct neighbour - to a point $p_{EC}$ at a far end of the conductive element. When the support element is stretched - e.g. along the longest dimension of the elongated conductive element by e.g. *100%* - the relative positioning of as and $a_{EC}$ does not change, because they are attached to each other, in particular:

$$0 \sim dist_{strain=0\%}(a_{EC}, a_S) \sim dist_{strain=100\%}(a_{EC}, a_S).$$

Where *dist* denotes the distance between two points for a particular strain value. Because the attachment is only at a very small portion, the deformation has only limited effect on the conductive element, and therefore:

$$dist_{strain=0\%}(a_{EC}, p_{EC}) \sim dist_{strain=100\%}(a_{EC}, p_{EC}).$$

On the other hand:

$$2 * dist_{strain=0\%}(a_S, p_S) \sim dist_{strain=100\%}(a_S, p_S),$$

and thus:

$$0 \sim dist_{strain=0\%}(p_{EC}, p_S) << dist_{strain=100\%}(p_{EC}, p_S).$$

In other words, assuming that the elongated conductive element is less stretchable, i.e. stiffer than the support element, then when the support element is stretched, at some locations on the conductive element the conductive element will move only very little or not at all relative to the support element, and at some other locations it will move relative to the support element by a significant distance.

For the above example, assume further that a second elongated conductive element is attached to at least a point $p_S'$ of the support element, where $dist_{strain=0\%}(p_S', p_S) \sim 0$, and arranged such that the longest dimension of the first elongated conductive element and the longest dimension of the second elongated conductive element are not parallel and in particular substantially perpendicular and further arranged such that the two conductive elements physically touch and are electrically connected when no deformation is applied. Because the point $p_{EC}$ was chosen at a far end of the first conductive element, it can be the case that when the strain is applied, the two conductive elements no longer physically touch and are no longer electrically connected.

In an embodiment, it can be the case that at least two conductive elements are arranged to have a first position relative to each other for a first state of deformation and to have a second position relative to each other for a second state of deformation. In particular, it can be the case that the change in position relative to each other is continuously depending on a continuous deformation.

In an embodiment, it can be the case that a percolation structure has a first connection pattern for a first state of deformation and a second connection pattern for a second state of deformation. In particular, it can be the case that the connection pattern on of a percolation structure depends on a continuous deformation.

In an embodiment, it can be the case that two conductive elements are of **type 1;** two conductive elements are of type 1 if they physically touch when the composite structure is in an undeformed state and for at least state of deformation (other than the undeformed state) do not physically touch.

In an embodiment, it can be the case that two conductive elements are of **type 2;** two conductive elements are of type 2 if they do not physically touch when the composite structure is in an undeformed state and for at least state of deformation (other than the undeformed state) do physically touch.

In an embodiment, it can be the case that for two conductive elements, when a one-parameter, continuous deformation is applied, e.g. a uniaxial stretching,

- • - optionally - for an interval $[0,s_1]$, where $0 \leq s_1$, of the parameter the two elements are separated by a gap,
- • for an interval $[s_1,s_2]$, where $s_1 < s_2$, of the parameter the two elements touch,
- • - optionally - for an interval $[s_2,s_3]$, where $s_2 < s_3$, of the parameter the two elements are separated by a gap.

Where the interval $[0,s_1]$ is empty and the interval $[s_2,s_3]$ is non-empty, the two conductive elements are of type 2. Where the interval $[0,s_1]$ is non-empty, the two conductive elements are of type 1.

For a chosen continuous deformation a physical connection pattern of two conductive elements along the continuous deformation is determined by the trajectories of the conductive elements and the relative placement of the conductive elements. Thereby the physical and/or electrical connection pattern along the chosen continuous deformation can be controlled by the initial arrangement of the conductive elements.

In an embodiment, it can be the case that conductive elements are arranged to form two or more, not necessarily connected, **groups,** and that, for at least one state of deformation, the element conductors of the two or more groups are (physically and/or electrically) connected.

In an embodiment, it can be the case that for at least one state of deformation the element conductors of two or more groups form, or at least are part of, a (physical and/or electrical) connection of at least a first terminal of a first set of terminals and at least a second terminal of a second set of terminals.

In an embodiment, it can be the case that each group, at least at average, has a different preferred orientation.

In an embodiment, it can be the case that conductive elements are elongated and arranged to form two or more groups, wherein for the at least one state of deformation:

- a physical connection is realized; and
- the physically connected elements of different groups form a substantive angle,

  o in particular an angle larger then 30°,
  o in particular an angle larger then 60°,
  o in particular are substantially orthogonal, or
  o in particular are orthogonal.

In an embodiment, it can be the case that for a first direction d the stretching limit of the support element into that direction is $L_d$ and that, when the support element is stretched in the direction d, the conductivity of a trail is a function on the interval $[0,L_d]$. Furthermore, it can be the case that the function is *zero* one or more subintervals of $[0,L_d]$.

Furthermore, it can be the case that the function is locally constant or at least locally substantially constant for each connected interval on which the function is non-zero. Such a function is called a **step-function.**

For example a function of the conductivity of a trail could be

2. *zero* on $[0,L_d/4[$ because the conductive elements do not touch for any strain $s_1$, where $s_1 \in [0,L_d/4[$,

3. *100 S/cm* on $[L_d/4, L_d/2]$, because the conductive elements do touch and form a single conductive path for any strain $s_2$, where $s_2 \in [L_d/4, L_d/2]$,

4. *zero* on $]L_d/2,3*L_d/4[$ because the conductive elements do not touch for any strain $s_3$, where $s_3 \in ]L_d/2,3*L_d/4[$, and

5. *200 S/cm* on $[3*L_d/4, L_d]$, because the conductive elements do touch and form two conductive paths for any strain $s_4$, where $s_4 \in [3*L_d/4, L_d]$.

In this example the function is a step-function comprising two steps, namely the first step *100 S/cm* and the second step *200 S/cm,* each step having the width $L_d/4$.

In an embodiment, it can be the case that a track comprises of two or more trails,

- the track - for at least one state of deformation - connecting a first terminal and a second terminal,
- each trail - for at least one state of deformation, the at least one states of deformation for different trails possibly being different - connecting the first terminal and the second terminal,
- and that if - for a particular state of deformation - two or more trails connect the first terminal and the second terminal, all the trails connecting the first terminal and the second terminal for that state of deformation are connected in parallel.

Such trails are said to be "virtually connected in parallel".

In an embodiment, it can be the case that the conductivity value of the track for a first state of deformation depends on the superposition of the conductivity values of the trails of the track for the first state of deformation. In particular, it can be the case that the conductivity function of a track, at least for a continuous deformation, depends on the superposition of the conductivity function of the trails of the track.

From the theory of Riemannian Integration it is well known that any piecewise continuous function on a finite interval can be approximated by the superposition of step-functions. By choosing trails that are virtually connected in parallel accordingly, the conductivity function of the track along a chosen continuous deformation, in particular for a uniaxial stretching, can be, or at least approximate, almost any desired function. For a given function and a fixed number of trails, the quality of the approximation can be increased by using trails whose steps have different width, e.g. broad width for approximating flat parts of the function and small width for approximating steep and/or alternating parts of the function.

According to the Poisson effect a stretchable support element, if stretched in one direction, will be compressed in the transverse direction. The amount of compression depends on the material and can be measured by the unitless Poisson's ratio $v=-d\varepsilon_{transversal} / d\varepsilon_{axial}$.

In an embodiment, it can be the case that for the Poisson ratio $v$ the following holds: - $v>0.4$ or $v>0.45$ or $v>0.48$ or $v>0.485$ or $v>0.49$ or $v>0.495$ or $v>0.499$.

In an embodiment, it can be the case that the conductive elements of two or more groups are arranged so that, when an uniaxial strain is applied (and the conductive elements of a second group move relative to conductive elements of a first group)

- the conductive elements the second group move in a direction transverse to the direction of the uniaxial strain,
- and, for at least one value of the uniaxial strain, conductive elements of the first group are (physically) connected to conductive elements of the second group.

In an embodiment, it can be the case that the conductive elements of two or more groups are arranged so that, when a uniaxial strain is applied

- the conductive elements of a second group move relative to conductive elements of a first group
- the conductive elements of the second group move in a direction transverse to the direction of the uniaxial strain,
- the conductive elements of the first group move relative to conductive elements of the second group
- the conductive elements of the first group move in a direction parallel to the direction of the uniaxial strain,

and, for at least one value of the uniaxial strain, conductive elements of the first group are (physically) connected to conductive elements of the second group.

For a chosen direction and a plane chosen orthogonal to the chosen direction a system of cylindrical coordinates $(x,y,\varphi)$ can be chosen, where x denotes the coordinate in the chosen direction, and $(y,\varphi)$ denote the polar coordinates in the chosen plane, where $y$ denotes the radial coordinate and $\varphi$ denotes the angle. For example, when a homogenous object is stretched in the $x$-direction, according to the Poisson effect, it is compressed in the $y$-direction and the $\varphi$-coordinate does not change.

In an embodiment, it can be the case that two elemental conductors

- for a chosen direction x,
- for a chosen plane $(y,\varphi)$ orthogonal to the direction x,
- for the continuous deformation of stretching in the x-direction,
  are arranged so that

  - for an undeformed state ($\varepsilon=0$) the two conductive elements are separated by a gap, the gap being in the x-direction and/or the $y$-direction,
  - and when the deformation of stretching in the $x$-direction ($\varepsilon\in[0,s_1]$, $s_1>0$) is applied continuously the two conductive elements move relatively to each other, so that the gap in the $x$-direction and/or the gap in the $y$-direction lessens,
  - and for a first state of deformation ($\varepsilon=s_1$) the two conductive elements physically touch, (the two elemental conductors therefore being of type 2)
  - and - optionally - when more stretching in the $x$-direction ($\varepsilon\in[s_1,s_2]$, $s_1<s_2$) is applied the two conductive elements slide along each other (where sliding means moving relative to each other while touching each other),
  - and - optionally - for a second state of deformation ($\varepsilon=s_2$) the two conductive elements stop to physically touch each other,
  - and - optionally - when even further more stretching in the $x$-direction ($\varepsilon\in[s_2,s_3]$, $s_2<s_3$) is applied the gap between the two conductive elements in the $x$-direction and/or the $y$-direction widens.

Furthermore, it can be the case that the two conductive elements are in different groups.
In an embodiment, it can be the case that two elemental conductors

- for a chosen direction x,
- for a chosen plane $(y, \varphi)$ orthogonal to the direction x,
- for the continuous deformation of stretching in the x-direction,
  are arranged so that

  - for an undeformed state ($\varepsilon=0$) the two conductive elements touch,
  - and when the deformation of stretching in the $x$-direction ($\varepsilon\in[0,s_1]$, $s_1>0$) is applied continuously the two conductive elements slide along each other ( where sliding means moving relative to each other while touching each other),
  - and for a first state of deformation ($\varepsilon=s_1$) the two conductive elements stop to physically touch each other, (the two elemental conductors therefore being of type 1)
  - and - optionally - when more stretching in the $x$-direction ($\varepsilon\in[s_1,s_2]$, $s_1<s_2$) is applied the gap between the two conductive elements in the $x$-direction and/or the $y$-direction widens.

Furthermore, it can be the case that the two conductive elements are in different groups.
In an embodiment, it can be the case that two conductive elements have - for a chosen x-direction - two or more different intervals in which they touch and/or slide along each other.

In an embodiment, it can be the case that for a first conductive element there are two or more conductive elements $CE_i$, so that - for a chosen *x*-direction - there exist (possibly different and not necessarily disjoint) intervals $I_i$ so that the first conductive element touches the conductive element $CE_i$ and/or slides along the conductive element $CE_i$ for strains in the interval $I_i$.

In an embodiment, it can be the case that the surface of at least one of the conductive elements is partially coated with a shell, in particular *10%* or *20%* or *30%* or *40%* or *50%* or *60%* or *70%* or *80%* or *90%* or more than 99% of the surface is coated with a shell.

In an embodiment, it can be the case that the shell comprises one or more, in particular two ore more, connected components.

In an embodiment, it can be the case that one or more, in particular two or more, connected components of the surface are uncoated.

In an embodiment, it can be the case that the shell is made of a coating material and the coating material has a different electrical conductivity than the conductive elements. It can be the case that the coating material's conductivity is less than ½, in particular less than *1/5* or less than *1/10* or less than *1/50* or less than *1/100* or less than *1/1000,* of the conductivity of the conductive elements. It can be the case that the coating material's conductivity is smaller than $10^{-4}$ *S/m,* in particular $10^{-5}$ *S/m* or $10^{-5}$ *S/m* or $10^{-7}$ *S/m* or $10^{-8}$ *S/m* or $10^{-10}$ *S/m* or $10^{-12}$ *S/m* or $10^{-14}$ *S/m.* In particular, it can be the case that the coating material is insulating.

In an embodiment, it can be the case that the shell is inhomogeneous. It can be the case that the thickness of the shell varies with location. It can be the case that the coating material comprises two or more material components.

In an embodiment, it can be the case that two ore more conductive elements are coated with a shell and that for a first state of deformation the two conductive elements physically touch. The touching may occur at locations or regions of the surface where none, one or both of the conductive elements are coated or partly coated. It can be the case that the conductivity between the two elements depends on a function that depends on the characteristics of the respective shells - e.g. the thickness of the respective shells, the proportion of the respective shells of the touching region of the respective shells and/or the material of the respective shells - at the respective locations of physical touching. If the deformation is altered, e.g. by applying more or less strain, it can be the case that the two conductive elements - for at least a continuous variation of the deformation - slide along each other's surface. It can be the case that, due to the sliding, for a second state of deformation, the two conductive elements touch at new locations of their surface, different from the locations of physical touching of the first state of deformation. It can be the case that the characteristics of the respective shells - at the locations where the conductive elements touch - are different from the characteristics of the respective shells at the location of physical touching of the first state of deformation. It can be the case that thereby the conductivity between the two conductive elements for the first state of deformation is different from the conductivity between the two conductive elements for the second state of deformation.

For example where two conductive elements are coated with a shell material and that shell material's conductivity is substantially smaller than the conductivity of the conductive elements, it can be the case that the two conductive elements - for a first state of deformation - touch at locations where both are uncoated. Thus the conductivity between the two conductive elements is high for the first state of deformation. If the deformation is altered, e.g. continuously, it can be the case that the two elements slide relatively to each other, according to the changes. For a second state of deformation, it can then be the case that the two conductive elements touch at locations where the surface of at least one of the conductive elements is partly coated. Accordingly, the conductivity between the two conductive elements is lower for the second state of deformation, because the contact surface is partly coated with a coating material of lower conductivity. If the deformation is further altered, it can be the case that for a third state of deformation the two conductive elements touch at locations where the surface of both conductive elements is coated. Thus the conductivity between the two conductive elements is lower for the third state of deformation than the conductivity for the second state of deformation. If the deformation is altered even further, it can be the case that the two conductive elements do no longer touch for a fourth state of deformation and that the conductivity between the conductive elements is zero or substantially zero. Let *f* denote a function that depends on the deformation and whose values are the conductivity between the two conductive elements, and let $d_i$ denote the *i-th* deformation, then it can be the case that $f(d_1) > f(d_2) > f(d_3) > f(d_4) \geq 0.$

In an embodiment, it can be the case that the coating material's thickness is smaller than 50nm, preferably smaller than 20nm, preferably smaller than 5 nm, preferably smaller than 1 nm, preferably smaller than 0.5 nm, preferably smaller than 0.2 nm.

It can be the case that the conductivity between two conductive elements touching at locations where at least one conductive element is coated and where the shell is thin, the conductivity between the two conductive elements is higher than expected from classical electric calculations. This is caused by the so-called "tunnel effect".

In an embodiment, it can be the case that for a continuous deformation, e.g. an uniaxial strain, the shells of two conductive elements that physically touch for at least a first state of deformation, are shaped and arranged so that the conductivity between the two conductive elements follows a given piecewise continuous function.

In an embodiment, it can be the case that the thickness from an uncoated surface area to a coated surface area changes gradually, e.g. the thickness is a smooth function of limited first derivative.

In an embodiment, it can be the case that the thickness from an uncoated surface area to a coated surface area changes discontinuously, e.g. the thickness is a step-function.

Coating allows for fine-tuning of the electrical conductivity between two conductive elements. Coating is one way of constructing trails, whose conductivity function is not limited to step-functions. By fine tuning the individual coatings, e.g. at various regions along the surface of the conductive elements, the conductivity of a track can be tailored with relatively few trails that are virtually connected in parallel.

In an embodiment, it can be the case that the conductive elements are sliding along each-other when strain is applied and that the thickness of the shell changes along one or more conductive elements. It can be the case that the expected contact resistance between the sliding conductive elements will change depending on the thickness of the respective shells at the location of physical contact. The relative placement pattern and/or the shell thickness pattern of the conductive elements can be arranged to create a tailored conductivity-strain dependence.

In an embodiment, it can be the case that a first conductive element's surface comprises two uncoated regions that are separated by a region that is coated, e.g. with an insulator, and that a second conductive element, for at least a part of a continuous deformation, slides along the first conductive element.

It can be that for a first part of the continuous deformation the second elemental conductor slides along a first uncoated region of the first conductive element, and the conductivity between the two conductive elements is constant or at least almost constant on a first level.

It can be the case that at some state of deformation the two conductive elements touch at a region of the first conductive element where the first conductive element's surface is coated and the conductivity between the two conductive elements rapidly decreases.

It can be the case that for a second part of the continuous deformation the second elemental conductor slides along a coated region of the first conductive element, and the conductivity between the two conductive elements is constant or at least almost constant on a second level, where the first level is substantially higher than the second level.

It can be the case that at some state of deformation the two conductive elements touch at a region of the first conductive element where the first conductive elements surface is again uncoated and the conductivity between the two conductive elements rapidly increases.

It can be the case that for a third part of the continuous deformation the second elemental conductor slides along a second uncoated region of the first conductive element, and the conductivity between the two conductive elements is constant or at least almost constant on a third level. It can be the case that the third level is substantially the same as the first level, In particular that the third level is equal to the first level.

In an embodiment it can be the case that the coating is composed of layers. It can be the case that the layers are deposited successively. It can be the case that some areas of the surface are coated with a different number of layers than other areas. It can be the case that the layers are evenly thick or differently thick.

In an embodiment, it can be the case that complex surface patterns, similar to topographical maps, are emulated by the deposition of two or more layers of shell-material. It can be the case that surface pattern is suited to tailor a given conductivity function.

In an embodiment, it can be the case that some or all conductive elements are substantially not stretchable, in particular rigid.

In an embodiment, it can be the case some or all conductive elements have a substantially elongated form, in particular an elongated form.

In an embodiment, it can be the case that some or all conductive elements comprise one or more nano-wires, in particular are a single nano-wire, a nano-wire being defined by having a length to diameter ratio of *50* or more and a diameter of *900 nm* or less.

In an embodiment, it can be the case that some or all conductive elements comprise one or more nano-wires whose complete surface is coated with a (first) shell. It can be the case that the shell is made of a material of high conductivity, in particular the conductivity of the (first) shell being higher than the conductivity of the nano-wire. An example are titanium oxide nano-wires that are coated with a (first) gold-shell. Note that for tailoring the conductivity, the surface of a nano-wire with a (first) shell can on top be partially coated with a (second) shell, as described before.

In an embodiment, it can be the case that some or all conductive elements, in particular where the conductive elements are nanowires, comprise, consist of or are coated by one or more materials of the materials: silver, gold, platinum, copper, nickel, iridium, titanium, niobium, tantalum or semiconducting materials, in particular based on silicon, gallium, indium, or its nitrides, or phosphides, or are made of carbon nanotubes, or graphene.

In an embodiment, it can be the case that some or all conductive elements are microparticles.

In an embodiment, it can be the case that some or all conductive elements are nano-particles.

In an embodiment, it can be the case that the support element comprises one or more, in particular two or more, components.

In an embodiment, it can be the case that the support element is made of or at least comprises a polymer, in particular polydimethylsiloxane (PDMS) or polyurethane or fluorinated silicone.

In an embodiment, it can be the case that the support element's Young's modulus is smaller than 5 $*10^9$ $Pa$, in particular smaller than $10^9$ $Pa$ or smaller than $10^8$ $Pa$ or smaller than $10^7$ $Pa$ or smaller than 5 $*10^6$ $Pa$ or smaller than 2 $*10^6$ $Pa$ or smaller than $10^6$ $Pa$, where $Pa$ denotes Pascal.

In an embodiment, it can be the case that the conductive element's Young's modulus is larger than the Young's modulus of the support element, in particular 2 times larger or 10 times larger or $10^2$ times larger or $10^3$ times larger or $10^6$ times larger or $10^9$ times larger.

In an embodiment, it can be the case that the surface of at least one of the conductive elements is partially coated with a shell, in particular *10%* or *20%* or *30%* or *40%* or *50%* or *60%* or *70%* or 80% or *90%* of the surface is coated with a shell, wherein the shell comprises or is made of at least one of the following list:

- aluminium oxide, titanium oxide, niobium oxide, tantalum pentoxide, zirconia or any other insulating ceramics and combinations thereof,
- organic mono-layers, in particular made of thiols or silanes,
- insulating polymers,
- any insulating material whose composition can be controlled on a nanoscale.

In an embodiment, it can bet he case that at least a part of the composite structure is transparent. In particular it can be the case that the support element or a component of the support element is transparent.

In an embodiment, it can be the case that the composite structure is used as or in at least one of the following list:

- a stretchable conductor or part of a stretchable conductor;
- a stretchable cable or part of a stretchable cable;
- a stretchable PCB/FPC or part of a stretchable PCB/FPC.

In an embodiment, it can be the case that the composite structure is used as a strain sensor or is a part of a strain sensor,

- in particular wherein the absolute value of the gauge factor of the composite structure, for least one continuous deformation - in particular an uniaxial stretching in at least one direction - is high,

    c in particular where the absolute value of its gauge factor is larger than *10* or *100* or *1000* or *1500* or *5000*.

In an embodiment, it can be the case that the composite structure is used as a strain sensor or is a part of a strain sensor, wherein the absolute value of an **initial gauge factor,** e.g. for an infinitesimal strain, for at least one continuous deformation, - in particular a uniaxial stretching in at least one direction - is high and in particular the absolute value of the initial gauge factor is larger than *10* or *100* or *1000* or *1500* or *5000*.

In an embodiment, it can be the case that at least one track comprises two or more sections wherein the sections have different gauge factor. In particular it can be the case, that, for at least a first section, the gauge factor is low, in particular lower than ½ or lower than 1/10 or lower than 1/20 or lower than 1/50 or lower than 1/100, and for at least a second section, the gauge factor is high, in particular higher than 2 or 10 or 100 or 1000 or 1500 or 5000. Furthermore, it can be the case that the composite structure comprises two or more tracks and that the sections of high gauge factor of different tracks are located at different point of interest. Furthermore, it can be the case that tracks connect different sets of terminals.

In an embodiment, it can be the case that the composite structure is arranged for local strain sensing. In particular where two or more tracks having sections of distinct gauge factor at different locations and the tracks connect different sets of terminals, an applied state of deformation at a certain location can be located, and optionally quantified, based on the measurement and/or comparison of conductivity of the individual tracks.

In an embodiment, it can be the case that, for a chosen direction of stretching, tracks of the composite structure are arranged to have sections of distinct conductivity at different levels along the chosen direction. An applied deformation at a certain level along the chosen direction can be located, and optionally quantified, based on the measurement and/or comparison of conductivity of the individual tracks.

In an embodiment, it can be the case that the composite structure is arranged to determine a change in a circumference, an area, a surface and/or a volume, based on a measured deformation, in particular based on a measured change of a uniaxial stretch.

In an embodiment, it can be the case that the composite structure is part of an implant for implanting into an animal body and/or a human body.

One method for producing a composite structure where the support element is made of polydimethylsiloxane (PDMS) and the conductive elements are made of silver nano-wires (AgNW), is the following photolithographic process on glass:

Step 1: Prior to any processing, a chromium layer is deposited on the glass substrate to prevent Si-O-Si bonds with PDMS and facilitate peeling.
Step 2: A film of AgNWs is first deposited on the substrate by centrifuging a solution of AgNWs dispersed in isopropanol.
Step 3: Drying, removing the isopropanol.
Step 4: The microstructures, such as conductive elements and/or percolation structures and/or trails and/or tracks, of AgNWs are created, e.g. on a wafer-scale, using positive photolithography and/or wet etching.
Step 5: A layer of PDMS is then cast and spin coated on top of the structures.
Step 6: After curing and peeling, the AgNWs are embedded just below the surface of the PDMS.

According to a variant, a composite structure can also be made using a photolithographic process on PDMS:

Step 1: A PDMS layer is initially spin coated on a chromium-coated glass substrate.
Step 2: An AgNW film is deposited and patterned as on glass.
Step 3: The resist is cured at room temperature for a week to avoid crack formation of the PDMS substrate due to thermal expansion.
Step 4: The surface is oxygen plasma treated or metalized to improve the wettability and adhesion of the photoresist.
Step 5: The microstructures, such as conductive elements and/or percolation structures and/or trails and/or tracks, are photo-patterned.
Step 6: A layer of PDMS is spin coated over the AgNWs and cured.

A method of producing a composite structure where the surface of conductive elements are partially coated with a shell, is the following:

Step 1: Prior to any processing, a chromium layer is deposited on the glass substrate to prevent Si-O-Si bonds with PDMS and facilitate peeling.
Step 2: A film of AgNWs is first deposited on the substrate by centrifuging a solution of AgNWs dispersed in isopropanol. (Alternatively, elongated metal structures can also be created "top-down" using standard lithography techniques. These can even be insulated at selected locations if needed.)
Step 3: Drying, removing the isopropanol.
Step 4: Surface-areas (regions/locations) that are designated to be uncoated are either protected by glass covers, in particular if the surface-areas are big, and/or by sacrificial photoresist (after patterning in the geometry of the designated uncoated surface-areas).
Step 5: A thin layer of aluminium oxide (shell material) is deposited on the surface by atomic layer deposition (thin film deposition technique). For example, the thickness can range from 2-3 angstroms to 50 nm.
Step 6: Covers and/or sacrificial resist are removed.
Step 7: A layer of PDMS is then cast and spin coated on top of the structures.
Step 8: Optionally, contact areas can be electrically connected by means of liquid metal to a voltage source in order to be functional.

According to a variant, different shell thicknesses can be produced by superposition of shell-layers:

Step 1-3: as above.
Step 4: Surface-areas (regions/locations) that are designated to be uncoated are protected by a positive sacrificial photoresist.
Step 5: A first, thin layer of aluminium oxide (shell material) is deposited on the surface by atomic layer deposition (thin film deposition technique). For example, the thickness can range from 2-3 angstroms to 50 nm.
Step 6: Optionally, additional positive sacrificial photoresist is deposited at surface-areas that have been coated, but are not designed to have additional shell-layers (additional photoresist can also be deposited on surface-areas on which sacrificial photoresist has already been deposited before).
Step 7 Optionally, a second, thin layer of aluminium oxide (shell material) is deposited on the surface by atomic layer deposition (thin film deposition technique). For example, the thickness can range from 2-3 angstroms to 50 nm.
Step 8 Optionally, step 6 and step 7 are repeated as often as necessary. Thereby the shell's thickness on unprotected surface-areas will grow layer by layer, whereas the number of layers will stop growing for the newly protected areas. The surface-areas that are designated to be uncoated were initially protected by photoresist and hence are not covered by any layer of aluminium oxide.

Step 8          The photoresist is removed.
Step 9:         A layer of PDMS is then cast and spin coated on top of the structures.
Step 10:        Optionally, contact areas are electrically connected by means of liquid metal to a voltage source in order to be functional.

The subject matter of the invention will be explained in more detail in the following text with reference to exemplary embodiments which are illustrated in the attached drawings, in which:

**Figure 1**    schematically shows an example for the relative movement of a first conductive element 30 relative to a second conductive element 31.

**Figure 2**    schematically shows an example of a trail 20 comprising five conductive elements 30, 31, 32, 33, 34.

**Figure 3**    schematically shows an example of a track 10 connecting a first and a second set of terminals, each set comprising of a single terminal 6.

**Figure 4**    schematically shows another example of a track 10 connecting a first and a second set of terminals, each set comprising of a single terminal 6.

**Figure 5**    schematically shows yet another example of a track 10 connecting a first and a second set of terminals, each set comprising of a single terminal 6.

**Figure 6**    schematically shows a method of production for a composite structure 1.

**Figure 7**    schematically shows an example of a conductive element 30 whose surface is partially coated with a coating/shell 60.

**Figure 8**    schematically shows an example of two conductive elements 30, 31 whose surface is partially coated with a coating or /shell 60 and which touch at regions where both conductive elements component of a stretchable support element 30, 31 are uncoated.

**Figure 9**    schematically shows an example of two corresponding views of the conductive elements of Figure 8, which now touching at regions where the first conductive element 30 is coated and the second conductive element 31 is uncoated.

**Figure 10**   shows corresponding views of the conductive elements of Figure 8, which now touch at regions where both conductive elements 30, 31 are coated.

**Figure 11**   schematically shows parts of a cross sections of conductive elements 30 whose surface are partially coated with a coating/shell 60.

**Figure 12**   schematically shows a composite structure 1 in the shape of a cantilever beam.

**Figure 13**   schematically shows a method for producing a composite structure 1 in the shape of a cantilever beam.

In principle, identical or functionally identical parts are provided with the same reference symbols in the figures.

The drawings described below represent composite structures comprising a support element with conductive elements. In most drawings, the support element is not shown, and it is understood that the conductive elements are, for example, embedded in or on the support structure. The support element can be stretched, and when it is, the conductive elements move relative to each other, coming into contact and losing contact depending on how they move. The drawings are mainly focused on what happens when the conductive elements move, depending on how the conductive elements are arranged and on their properties, e.g. on a surface coating.

Materials that can be used for the support element and the conductive elements are presented in the preceding general part of the specification.

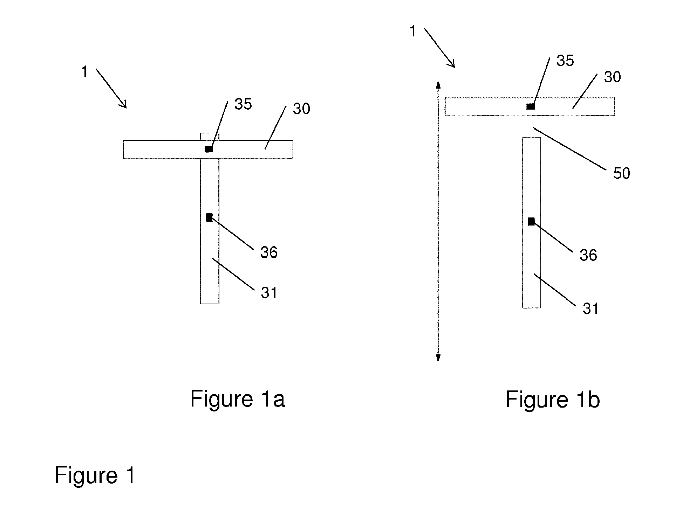

**Figure 1** schematically shows an example for the relative movement of a first conductive element 30 relative to a second conductive element 31. In the example the conductive elements 30, 31 are elongated and can be modelled as being attached at a portion 35, 36 of the respective conductive element's surface to the support element.

**Figure 1a** shows the composite structure 1 in an undeformed state, i.e. no strain is applied to the composite structure 1. The first conductive element 30 and the second conductive element 31 physically touch and are electrically connected. At the touching point they form a substantive angle of approximately 90°.

**Figure 1b** shows the composite structure 1 when a uniaxial strain is applied in the direction as indicated by the arrow. The composite structure 1 is stretched and the distance between material points in the support element changes. The portion 35 of the first conductive element's surface attached to the support element and the portion 36 of the second conductive element's surface attached to the support element are now more at a greater distance from each other than in the undeformed state. Accordingly the two conductive elements 30, 31 change their relative position to one another: they move relatively to each other. When applying the strain, the first conductive elements 30 and the conductive elements 31 first slide on each other, and at a particular strain they stop touching. Figure 1b shows a state of deformation where the two conductive elements 30, 31 are at already at a certain distance from each other and are separated by a gap 50.

In this example, the shape of the two conductive elements 30, 31 does not change significantly during the deformation of the support element, but in general the shape, orientation or angle (relative to a reference) of a conductive element 30, 31 can change from one state of deformation to another state of deformation.

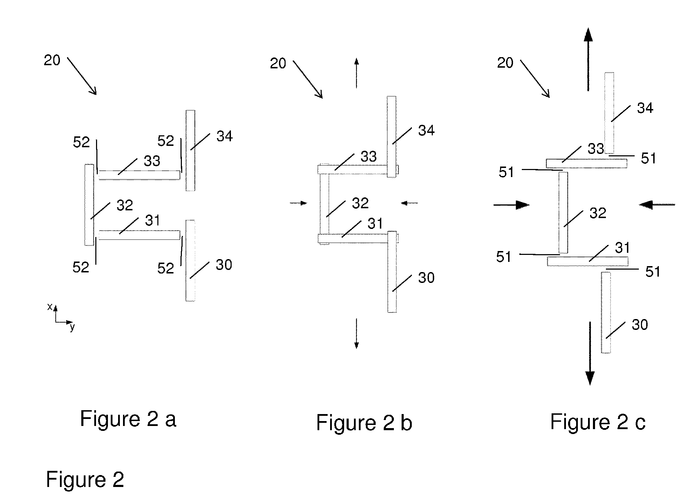

**Figure 2** schematically shows an example of a trail 20 comprising five conductive elements 30, 31, 32, 33, 34. In the example the conductive elements 30, 31, 32, 33, 34 are elongated. For the example a system of cylindrical coordinates *(x,y, φ)* is chosen, where x denotes a chosen direction, and *y* denotes an direction orthogonal to x. The directions x and *y* are indicated in the figure and *φ* is omitted as the figure shows a two-dimensional section.

The conductive elements 30, 31, 32, 33, 34 can be grouped in a first group of conductive elements comprising (a first) conductive element 30, (a third) conductive element 32 and (a fifth) conductive element 34 (drawn vertically) and a second group of conductive elements group of conductive elements comprising (a second) conductive element 31 and (a fourth) conductive element 33 (drawn horizontally).

**Figure 2a** shows the trail 20 in a first state of deformation, e.g. an undeformed state.

The conductive elements 30, 31, 32, 33, 34 are separated by (horizontal) gaps 52 in the *y*-direction. There is no physical contact between the conductive elements 30, 31, 32, 33, 34 and the conductivity between the conductive elements 30, 31, 32, 33, 34 is low, e.g. zero. Note that also two conductive elements that do not physically touch but are physically close can exchange electric charges, this phenomenon is known as the tunnel-effect. Note that the projections of the conductive elements 30, 31, 32, 33, 34 onto the *x*-coordinate overlap.

**Figure 2b** shows the trail 20 in a second state of deformation resulting from a uniaxial stretching along an axis indicated by the arrows in the *x*-direction. The stretching in the *x*-direction causes a change in the relative position of the projections of the conductive elements 30, 31, 32, 33, 34 onto the *x*-coordinate, but the projections onto the *x*-coordinate still overlap.

Due to the Poisson effect a stretching in the *x*-direction causes a contraction in the *y*-direction, which in turn causes a change in the projections of the conductive elements 30, 31, 32, 33, 34 onto the *y*-coordinate. In Figure 2b this has caused the gaps 52 in the *y*-direction to close: the projections of the conductive elements 30, 31, 32, 33, 34 on the *y*-coordinate now overlap.

The conductive elements 30, 31, 32, 33, 34 now physically touch, and the trail can conduct current. In particular the conductive elements 30, 31, 32, 33, 34 of the two groups of conductive elements are connected and each pair of connected conductive elements 30, 31, 32, 33, 34 forms a substantive angle of approximately 90°.

**Figure 2c** shows the trail 20 in a third state of deformation resulting from a further uniaxial stretching along the same axis as before. The stretching in the *x*-direction causes a further change in the projections of the conductive elements 30, 31, 32, 33, 34 onto the *x*-coordinate and now the projections onto the *x*-coordinate do no longer overlap. The conductive elements 30, 31, 32, 33, 34 are now separated by (vertical) gaps 51 in the *x*-direction.

There is no longer a physical contact between the conductive elements 30, 31, 32, 33, 34 and the conductivity between the conductive elements 30, 31, 32, 33, 34 is again low, e.g. zero.

The conductivity function of the trail for the described uniaxial stretching is a step function: at first zero (or almost zero), then constant (or almost constant) at a higher level, and then again zero (or almost zero). By superimposing several step functions every conductivity function of practical interest can be approximated. In practice the superimposition can be realized e.g. by connecting various trails or tracks (virtually) in parallel.

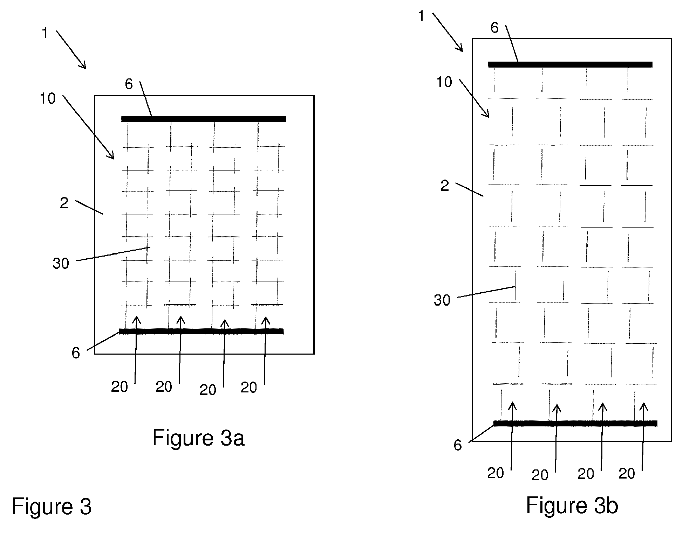

**Figure 3** schematically shows an example of a track 10 connecting a first and a second set of terminals, each set comprising a single terminal 6. In other embodiments (not shown) there are several terminals per set, each terminal contacting one or two or more trails. The track 10 comprises four trails 20. Note that Figure 3 could also be described as showing four tracks 10 each comprising a single trail 20 or two tracks 10 each comprising two trails 20 etc. In the example the conductive elements 30 are elongated.

Each trail 20 comprises conductive elements 30 arranged similarly to those in the embodiment of Figure 2. Figures 3a-3b also schematically show the stretchable support element 2 which is omitted in most other figures for clarity.

**Figure 3a** shows the track 10 in a first state of deformation, e.g. an undeformed state, where the conductive elements 30 of each trail 20 are physically and electrically connected and electrically connect the first and the second (set of) terminal(s) 6. The conductivity between the first and the second (set of) terminal(s) 6 in this embodiment can be high.

**Figure 3b** shows the track 10 in a second state of deformation, e.g. when an uniaxial strain is applied. The conductive elements 30 are now separated by vertical gaps and no longer physically connect the first and the second (set of) terminal(s) 6. The conductivity between the first and the second (set of) terminal(s) 6 in this embodiment is low, e.g. zero.

The embodiment of Figure 3 can e.g. be used for discrete strain sensing.

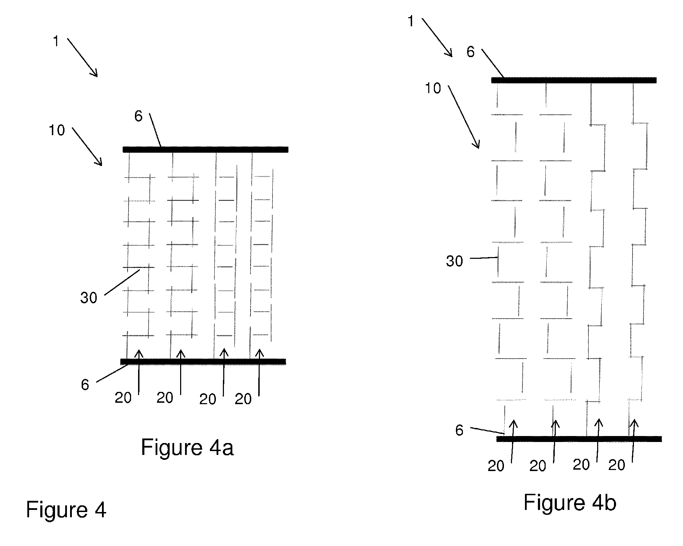

**Figure 4** schematically shows an example of a track 10 connecting a first and a second set of terminals, each set comprising a single terminal 6. The track 10 comprises four trails 20. Again, the categorization into tracks and trails could be different. In the example the conductive elements 30 are elongated

**Figure 4a** shows the track 10 in a first state of deformation, e.g. an undeformed state. The conductive elements 30 of the left two trails 20 are physically and electrically connected and electrically connect the first and the second (set of) terminal(s) 6. The conductive elements 30 of the right two trails 20 are physically not connected. Thus the first and the second (set of) terminal(s) 6 are connected by two trails 20.

**Figure 4b** shows the track 10 in a second state of deformation, e.g. when an uniaxial strain is applied. Now the conductive elements 30 of the left two trails 20 are no longer physically connected. Instead, now the conductive elements 30 of the right two trails 20 are physically and electrically connected and electrically connect the terminals 6. Thus the first and the second (set of) terminal(s) 6 are again connected by two trails 20.

Assume the left two trails disconnect at exactly the amount of stretch at which the right two tracks connect. Then the first and the second (set of) terminal(s) 6 are connected by two trails for all states of deformation between the embodiments shown in Figure 4a and Figure 4b. It thereby can be accomplished that the conductivity between the first and the second (set of) terminal(s) 6 is constant or almost constant for all uniaxial strain values.

The embodiment of Figure 4 can be used for e.g. creating composite structures 1 whose conductivity is constant or almost constant for a certain amount of strain applied in at least one direction. By using a multitude of trails and/or tracks the assumption of equal disconnection/connection strains can e.g. be emulated by statistical effects.

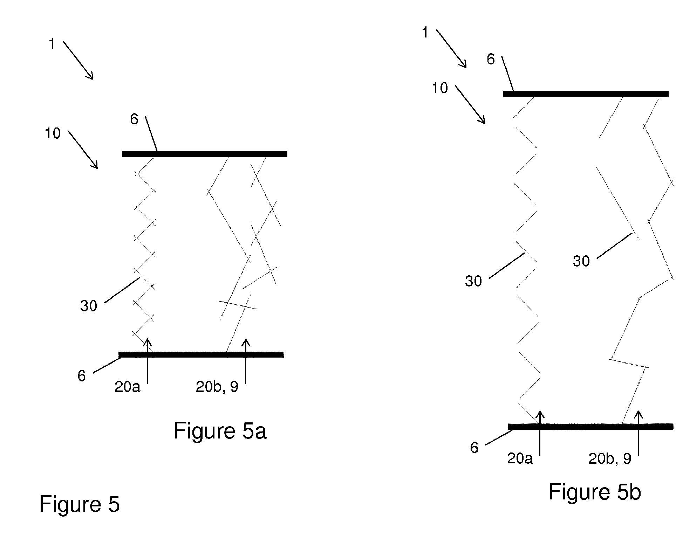

**Figure 5** schematically shows an example of a track 10 connecting a first and a second set of terminals, each set comprising a single terminal 6. The track 10 comprises two trails 20. Again, the categorization into tracks and trails could be different. In the example the conductive elements 30 are elongated

**Figure 5a** shows the track 10 in a first state of deformation, e.g. an undeformed state. The conductive elements 30 of the left trail 20a are physically and electrically connected and electrically connect the first and the second (set of) terminal(s) 6. The conductive elements 30 of the left trail 20a can be separated in two groups whose conductive element 30 at the connection points form a substantive angle. The right trail 20b can better be described as a percolation structure 9. At the first state of deformation the percolation structure forms one connected path between the first and the second (set of) terminal(s) 6. Not all conductive elements 30 of percolation structure 9 are used for the conductive path.

**Figure 5b** shows the track 10 in a second state of deformation, e.g. when an uniaxial strain is applied. Now the conductive elements 30 of the left trail 20 are no longer physically connected. Again, the conductive elements 30 of the percolation structure 9 again form one connected path between the first and the second (set of) terminal(s) 6. But now the conductive path is formed by (partially) other conductive elements 30 of the percolation structure 9. Again, not all conductive elements 30 of percolation structure 9 are used for the conductive path.

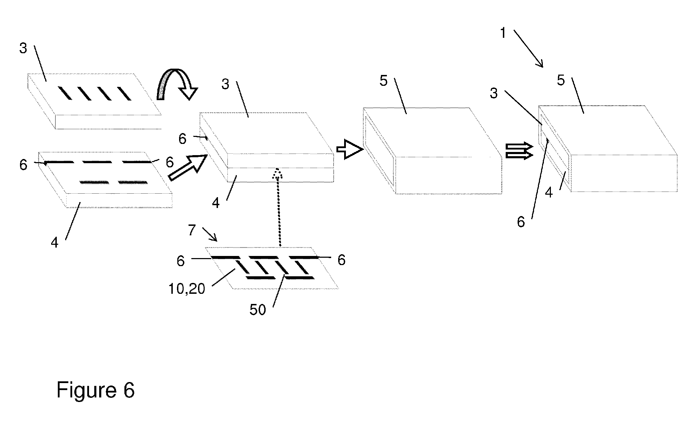

**Figure 6** schematically shows a method of production for a composite structure 1.

In this example the stretchable support element comprises three components 3, 4, 5 made of stretchable material; namely an upper component 3, a lower component 4 and a sleeve 5. The track 10 of the embodiment comprises a single trail 20 comprising of a first and a second group of conductive elements. The conductive elements 30 of the first group of conductive elements are arranged to be located at a lower side of the upper component 3. The conductive elements 30 of the second group of conductive elements are arranged to be located at an upper side of the lower component 4.

The conductive elements of the two groups can be manufactured and/or arranged on the respective component by e.g. photolithographic and other processes, as described in the general part of the specification.

In a next step, the upper component 3 and the lower component 4 are put together so that the lower side of the upper component 3 and the upper side of the lower component 4 touch. Thereby the conductive elements 30 of the upper component 3 and of the lower component 4 are located adjacent to a common plane 7. In the example of Figure 6 the trail is initially not connected (and therefore is of type 2).

In a further step, the two closely spaced components 3, 4 are inserted into the sleeve, which preferably is tight enough to press together and keep together the two closely spaced components 3, 4.

The final composite structure 1 is shown on the right side; a terminal 6 on each side allows for electrical connection. According to the arrangement of the two groups in the common plane 7, the track is not connected in the undeformed state. For a certain level of deformation or strain the conductive elements are compressed (e.g. for a transversal stretch due to the Poisson effect) and the gaps 50 in the common plane 7 close so that the conductive elements of the two groups of conductive elements physically and electronically connect.

The method of production explained in conjunction with Figure 6 can be applied to the structures of the figures 2-5 and others. In addition, several similar structures can be put on top of each other - in one or more sleeves - to improve the robustness of the system and minimize the consequences of production errors.

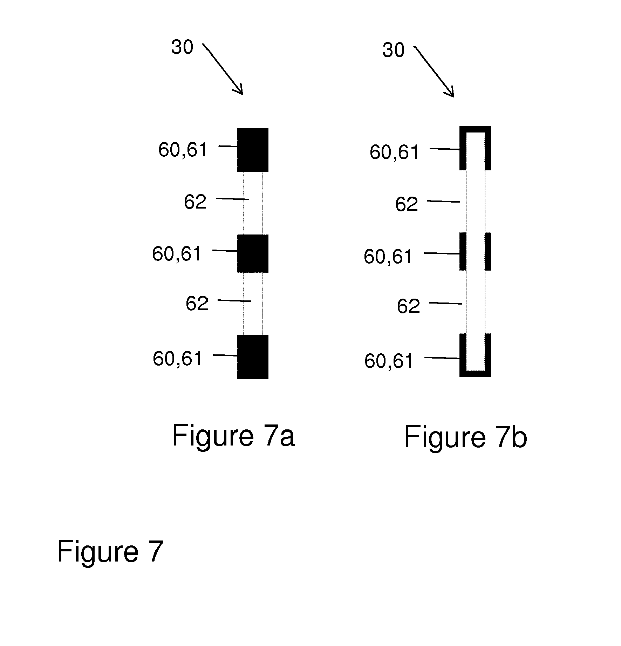

**Figure 7** schematically shows an example of a conductive element 30 whose surface is partially coated with a coating/shell 60.

**Figure 7a** schematically shows the conductive element 30 whose surface comprises three coated connection components 61 and two uncoated connection components 62.

**Figure 7b** schematically shows a cross-section of the conductive element 30.

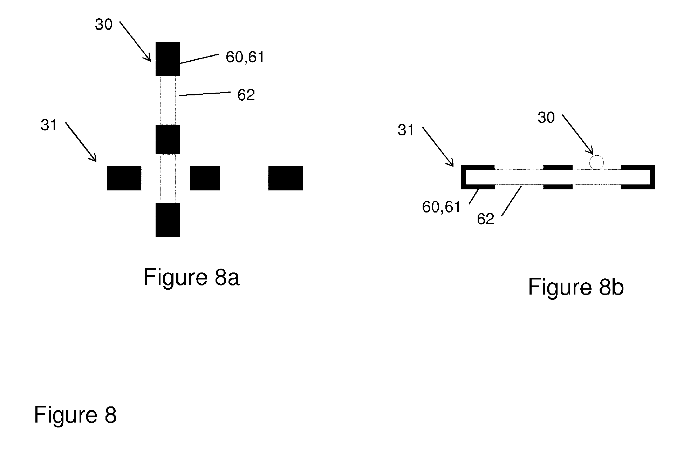

**Figure 8** schematically shows an example of two conductive elements 30, 31 whose surface is partially coated with a coating or shell 60 and which touch at locations or regions where both conductive elements 30, 31 are uncoated.

**Figure 8a** schematically shows the two conductive elements 30, 31 whose surfaces each comprise three coated connection components 61 and two uncoated connection components 62. The two conductive elements 30, 31 physically touch at locations or regions, where both conductive elements 30, 31 are uncoated. The electrical connection therefore is not affected by the shell. The conductivity between the conductive elements 30, 31 thus is high.

**Figure 8b** schematically shows a cross-section of the situation of Figure 8a, with the two conductive elements 30, 31 physically touching.

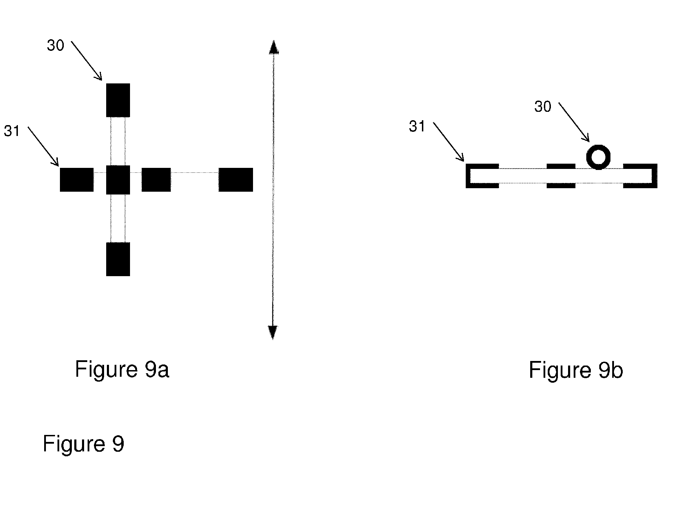

**Figure 9** shows corresponding views of the conductive elements of Figure 8, now touching at locations or regions where the first conductive element 30 is coated and the second conductive element 31 is uncoated. This situation can arise if the embodiment of Figure 8 is deformed in a direction as indicated by the arrow in **Figure 9a.**

The electrical connection therefore is affected by a shell. If the shell is made of a material of a lower conductivity than the conductive elements 30, 31, the conductivity between the conductive elements 30, 31 is lower than in Figure 8. The conductivity between the conductive elements 30, 31 has a first value, which can be essentially zero.

**Figure 9b** schematically shows a cross-section of the situation.

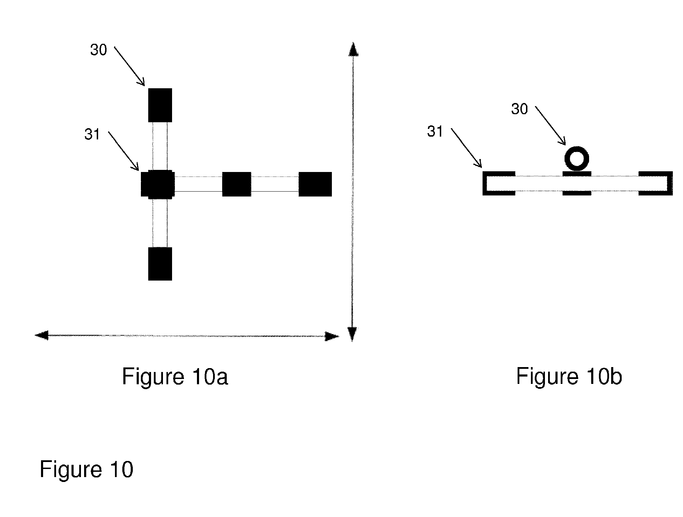

**Figure 10** shows corresponding views of the conductive elements of Figure 8, now touching at locations or regions where both conductive elements 30, 31 are coated. This situation can appear if the embodiment of Figure 8 is deformed in both of the directions indicated by the arrows in **Figure 10a.**

The electrical connection therefore is affected by two shells. If the shells are made of the same material as in the Figure 9 and have the same thickness, then the conductivity between the conductive elements 30, 31 is on average half of that in Figure 9.

**Figure 10b** schematically shows a cross-section of the situation.

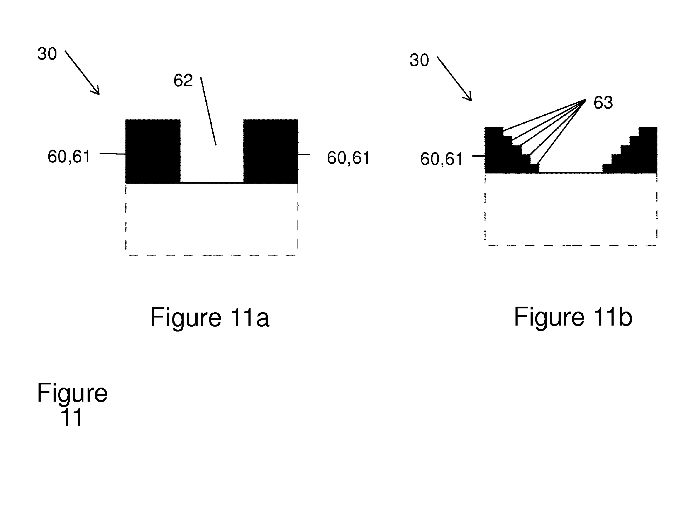

**Figure 11** schematically shows part of a cross section of conductive elements 30 whose surface are partially coated with a coating or shell 60.

**Figure 11a** schematically shows section of a cross sections of a conductive element 30 whose surface is partially coated with a coating or shell 60. In this example the transition of the thickness from an uncoated surface area to a coated surface area is discontinuous, e.g. the thickness follows a step-function. If a second conductive element slides from the uncoated to the coated area or vice versa, the conductivity between the two conductive elements can change drastically when the second conductive elements slides over the step's boundary.

**Figure 11b** schematically shows part of a cross section of a conductive element 30 whose surface is partially coated with a coating/shell 60. In this example the transition of the thickness from an uncoated surface area to a coated surface area changes gradually in small steps. The coating is made of layers 63, the ground layer 63 being slightly more expanded that the next layer 63 and so on. The layers 63 e.g. can be mono-layers. In this way, complex height distributions as in topographical maps can be generated. The gradual changes in the thickness in very small steps can approximate a smooth function of limited first derivative. If a second conductive element slides from the uncoated to the coated area the conductivity between the two conductive elements can change smoothly or gradually according to the smooth or gradual increase of thickness of the shell.

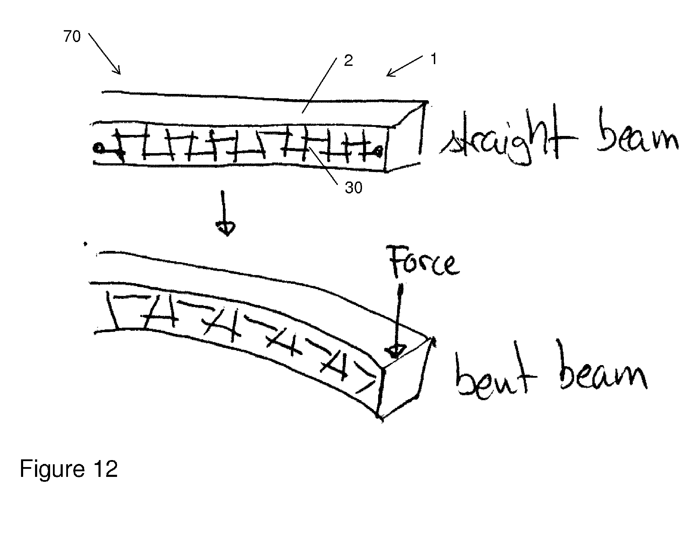

**Figure 12** schematically shows a composite structure 1 in the shape of a cantilever beam 70. Conductive elements 30 are arranged in or on the support element 2 in a pattern similar than in Figures 2-5 (the drawing shows the conductive elements 30 on a surface of the support element 2 for clarity; typically they can be hidden inside the support element 2, and several tracks can be present above and next to each other). When the cantilever beam 70 is bent, some sections of the support element 2 are compressed and other sections are stretched. Depending on their location and arrangement relative to one another, conductive elements will remain in contact, lose contact or come into contact physically and/or electrically. The amount of bending can thereby be measured by measuring the (change in) conductivity in one or more tracks of the composite structure 1.

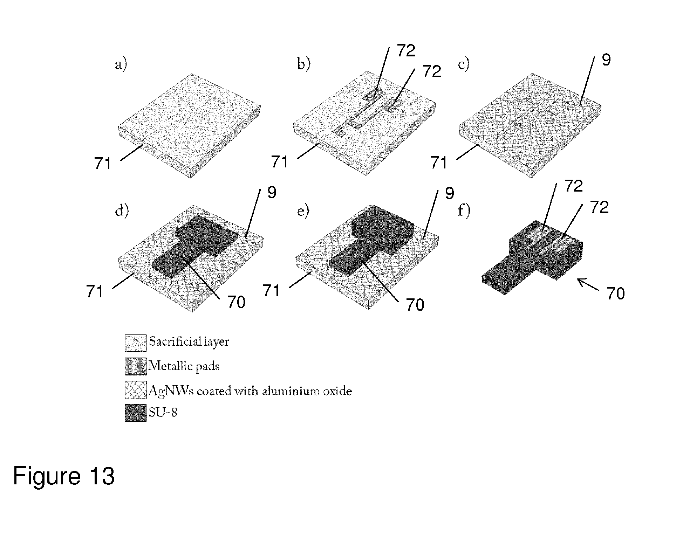

**Figure 13** schematically shows a method for producing a composite structure 1 in the shape of a cantilever beam.

Step a) A sacrificial layer 71 is deposited.

Step b) Metallic pads 72 for better subsequent electric contact are created, e.g. by vapour deposition. An example for a suitable metal is gold.

Step c) A percolation structure 9, e.g. a AgNW network, is deposited using centrifugation (as described before) on the sacrificial layer 71 and the pads 72. Optionally, a deposition of shell material, in particular layer deposition, e.g. atomic layer deposition of aluminium oxide, can be performed. For example, the layer thickness can range from 2-3 angstroms to 50 nm.

Step d) A polymer, e.g. SU-8 polymer photoresist, is used as the constituent material of the cantilever beam (70). Optionally, it can be photolithographically patterned in the shape of a beam attached to a block, which makes the handling easier.

Step e) Optionally, the thickness of the block is further increased by additional patterning of thick SU-8. The increased thickness of the block can improve the handling of the cantilever beam.

Step f) Optionally, after etching of the sacrificial layer 71, a passivation layer (such as parylene) can be deposited thermally to isolate the cantilever beam 70. The pads' 72 contact area on the block can be protected from the passivation layer e.g. by some cover (because it can have a rather big area, e.g. several mm$^2$). The figure f) shows the cantilever beam 70 from the bottom side (turned over as compared to the figures d) and e)) after etching and after deposition of the passivation layer. Therefore only the pads' 72 contact areas are visible. The percolation structure 9 is hidden under the passivation layer and the pads' contact areas respectively.

When the cantilever beam is bent, the conductive elements, e.g. the AgNW, move relative to each other, thereby physically connecting or disconnecting and/or sliding relative to each other.

In an embodiment, it can be the case that conductive elements initially physically touch. In conventional Atomic Force Microscopy (AFM) applications the strain is typically low, e.g. 5% or smaller. Therefore for such an application the shell's thickness can be tailored with a steep function similar to the situation depicted in Figure 11 a.

| | |
|---|---|
| 1 | composite structure |
| 2 | stretchable support element |
| 3 | component of a stretchable support element |
| 4 | component of a stretchable support element |
| 5 | sleeve (component of a stretchable support element |
| 6 | terminal/set of terminals |
| 7 | common plane |
| 9 | percolation structure |
| 10 | track |
| 20 | trail |
| 30 | (a first) conductive element |
| 31 | (a second) conductive element |
| 32 | (a third) conductive element |
| 33 | (a forth) conductive element |
| 34 | (a fifth) conductive element |
| 35 | portion of a (first) conductive element's surface attached to a support element |
| 36 | portion of a (second) conductive element's surface attached to a support element |
| 40 | (a first) group of conductive elements |
| 41 | (a second) group of conductive elements |
| 50 | gap |
| 51 | gap in the x-direction |
| 52 | gap in the y-direction |
| 53 | gap in the x-direction and the y-direction |
| 60 | coating/shell |
| 61 | coated connection component |
| 62 | uncoated connection component |
| 63 | layer (of shell) |
| 70 | cantilever beam |
| 71 | sacrificial layer |
| 72 | pad |

**Claims**

1. A composite structure (1) comprising

   • a support element (2)

        o the support element being stretchable, and
        o the support element being insulating;

   • a first and a second set of terminals (6) for electrically contacting the composite structure (1);

        o each set of terminals (6) comprising one or more terminals (6); and

   • one or more electrically conductive tracks (10) for electrically connecting one or more terminals (6) of the first set of terminals (6) to one or more terminals (6) of the second set of terminals (6),

o the tracks (10) being supported by the support element (2), and
o an electrical conductivity of each track (10) depending on a (first) conductivity function,

- a conductivity function being dependent on a (mechanical) deformation of the support element.

2. The composite (1) structure according to claim 1, wherein for at least one *direction d* such the support element's (2) stretching limit $L_d$ in the direction *d* is $L_d > 2\%$,
2. in particular $L_d > 5\%$ or $L_d > 10\%$ or $L_d > 20\%$ or $L_d > 35\%$ or $L_d > 50\%$ or $L_d > 100\%$ or $L_d > 200\%$ or $L_d > 300\%$,

  ○ the stretching limit in a direction $L_d$ being a strain value such that, when the strain value is applied into that direction, the support element (10) breaks.

3. The composite structure (1) according to one of claims 1 to 2, wherein the conductivity function for at least one track can be constant or substantially constant for at least a parameter-interval of at least one deformation.

4. The composite structure (1) according to one of claims 1 to 3, wherein the conductivity function for at least one track (10) substantially differs for at least two states of deformation,

  • in particular wherein the stretching limit for one direction is $L_d$ and two values *f(x), f(y)*, where $0 < x < y < L_d$, of the conductivity function differ by at least *100 S/cm,*

    o in particular by at least *200 S/cm* or at least *500 S/cm* or at least *1000 S/cm* or at least *2000 S/cm* or at least *5000 S/cm.*

5. The composite structure (1) according to one of claims 1 to 4, wherein a track (10) comprises one or more trails (20), in particular two or more trails (20), a **trail** (20) being a system comprising two or more **conductive elements** (30, 31, ...), in particular a plurality of conductive elements (30, 31, ...), where

  • the conductive elements (30, 31, ...) are electrically conductive,
  • the conductive element (30, 31, ...) are supported by the support element (2), and
  • for at least one state of deformation the trail (20) galvanically connects two (or more) terminals (6).

6. The composite structure (1) according claim 5, wherein at least one track (10) and/or trail (20) comprises two or more conductive elements (20), in particular a plurality of conductive elements (20), wherein the two conductive elements (20) are arrange to have a first position relative to each other for a first state of deformation and to have a second position relative to each other for a second state of deformation, in particular, it can be the case that the change in position relative to each other is continuously depending on a continuous deformation.

7. The composite structure (1) according to one of claims 5 to 6, wherein at least two conductive elements (30, 31, ...) are arranged to physically touch for at least a first state of deformation and to not physically touch for at least a second state of deformation.

8. The composite structure (1) according to one of claims 5 to 7, wherein at least two conductive elements (30, 31, ...) are arranged to galvanically connect for at least a third state of deformation and to not galvanically connect for at least a fourth state of deformation.

9. The composite structure (1) according to one of claims 5 to 8, wherein the two or more conductive elements (30, 31, ...) are arranged to form a **percolation structure** (9),

  • a percolation structure (9) being a cluster of conductive elements (30, 31, ...), where at least some of the conductive elements (30, 31, ...) are (physically and/or electrically) connected and form connected components.

10. The composite structure (1) according to claim 9, wherein the (physical and/or electrical) connectivity of the percolation structure (9) depends on the applied deformation.

11. The composite structure (1) according to one of claims 9 to 10, wherein the conductive elements (30, 31, ...) are arranged, so that the connections of the percolation structure (9) (physically and/or electrically) open and/or close depending on the applied deformation.

12. The composite structure (1) according to one of claims 5 to 11, according to one of the claims 6 to 11, wherein the surface of at least one of the conductive elements (30, 31, ...) is partially coated with a shell (60),

  • in particular *10%* or *20%* or *30%* or *40%* or *50%* or *60%* or *70%* or 80% or 90% of the surface is coated with a shell (60).

13. The composite structure (1) according to claim 12, wherein the shell (60) is made of a coating material and the coating material has a different electrical conductivity than the conductive elements (30, 31, ...),

  • in particular wherein the coating material's conductivity is smaller than $10^{-4}$ *S/m,* in particular $10^{-5}$ *S/m* or $10^{-6}$ *S/m* or $10^{-7}$ *S/m* or $10^{-8}$ *S/m* or $10^{-10}$ *S/m* or $10^{-12}$ *S/m* or $10^{-14}$ *S/m.*

14. The composite structure (1) according to one of claims 12 to 13, wherein the shell (60) is inhomogeneous,

  • preferably wherein the thickness of the shell (60) varies with location

15. The composite structure (1) according to one of claims 12 to 14, wherein the coating material is insulating.

16. The composite structure (1) according to one of claims 5 to 15, wherein at least one conductive element (30, 31, ...) is arranged so that a only a portion (35) of the conductive element's (30, 31, ...) surface is attached to the support element (2), in particular the portion (35) can be smaller than 80% or *70%* or *60%* or *50%* or *40%* or *30%* or *20%* or *10%* or 5% or 2% or 1% of the conductive element's surface (30, 31, ...).

17. The composite structure (1) according to one of the claims 5 to 16, wherein the conductive elements (30, 31, ...) are arranged to form two or more groups (40) and that, for at least one state of deformation, the element conductors (30, 31, ...) of two or more groups (40) are (physically/electrically) connected.

18. The composite structure (1) according to claim 17, wherein, for the at least one state of deformation,

  • a physical connection is realized;
  • the conductive elements (30, 31, ...) are elongated; and
  • the physically connected elements (30, 31, ...) of different groups (40) form a substantive angle,

    o in particular an angle larger then 30°,
    o in particular an angle larger then 60°,
    o in particular are substantially orthogonal,
    o in particular are orthogonal.

19. The composite structure (1) according to one of claims 17 to 18, wherein the conductive elements (30, 31, ...) of two or more groups (40) are arranged so that, when an uniaxial strain is applied

  • the conductive elements (30, 31, ...) of a second group (40) move in a direction transverse to the uniaxial strain,
  • and, for at least one value of the uniaxial strain, conductive elements (30, 31, ...) of the first group (40) are (physically) connected to conductive elements (30, 31, ...) of the second group (40).

20. The composite structure (1) according to one of claims 5 to 19, wherein some or all conductive elements (30, 31, ...) are substantially not stretchable, preferably rigid.

21. The composite structure (1) according to one of claims 5 to 20, wherein some or all conductive elements (30, 31, ...) have an elongated form.

22. The composite structure (1) according to one of claims 5 to 21, wherein some or all conductive elements (30, 31, ...) comprise one or more nano-wires, in particular are a single nano-wire,
a nano-wire being defined by having a length to diameter ratio of *50* or more and a diameter of *300 nm* or less.

23. The composite structure (1) according to claim 22, wherein some or all nano-wires comprise, consist of or are coated by one or more materials of the following list:

- silver,
- gold,
- platinum,
- iridium,
- titanium,
- tantalum,
- niobium,
- steel,
- copper,
- nickel
- conductive polymer.

24. The composite structure (1) according to one of claims 1 to 23, wherein the support element (2) comprises one or more, in particular two or more, components (3).

25. The composite structure (1) according to one of claims 1 to 24, wherein the support element (2) is made of or at least comprises a polymer, in particular polydimethylsiloxane (PDMS) or polyurethane or fluorinated silicone.

26. The composite structure (1) according to one of the claims 12 to 25, wherein the shell (60) comprises or is made of at least one of the following list:

- aluminium oxide, titanium oxide, niobium oxide, silicon oxide, or any ceramics
- organic mono-layers, in particular made of thiol or silane,
- any insulating material whose decomposition can be controlled on a nanoscale.

27. The composite structure (1) according to one claims 1 to 26, the composite structure (1) being used as or in at least one of the following list:

- a stretchable conductor or part of a stretchable conductor;
- a stretchable cable or part of a stretchable cable;
- a stretchable PCB/FPC or part of a stretchable PCB/FPC.

28. The composite structure (1) according to one of claims 1 to 26, wherein the composite structure (1) is used as a strain sensor or is a part of a strain sensor,

- in particular where the absolute value of the gauge factor of the composite structure (1), for least one continuous deformation - in particular an uniaxial stretching - in at least one direction, is high,

  o in particular where the absolute value of its gauge factor is larger than *10* or *100* or *1000* or *1500* or *5000*.

29. The composite structure (1) according to one of claims 1 to 26, wherein the composite structure (1) is used as a strain sensor or is a part of a strain sensor,

- wherein the absolute value of the initial gauge factor of the composite structure (1), for least one continuous deformation - in particular an uniaxial stretching in at least one direction - is high,

  o in particular where the absolute value of its gauge factor is larger than *10* or *100* or *1000* or *1500* or *5000*.

Figure 1a

Figure 1b

Figure 1

Figure 2 a          Figure 2 b          Figure 2 c

Figure 2

Figure 3a

Figure 3

Figure 3b

Figure 4a

Figure 4

Figure 4b

EP 3 103 763 A1

Figure 5a

Figure 5

Figure 5b

24

Figure 6

30

60,61

62

60,61

62

60,61

Figure 7a

30

60,61

62

60,61

62

60,61

Figure 7b

Figure 7

30

60,61

62

31

Figure 8a

31

30

60,61

62

Figure 8b

Figure 8

30

31

Figure 9a

31

30

Figure 9b

Figure 9

Figure 10a

Figure 10b

Figure 10

30

62

60,61

60,61

Figure 11a

30

63

60,61

Figure 11b

Figure
11

Figure 12

a)

b)

72

72

c)

9

71

71

71

d)

9

e)

9

f)

72

72

71

70

71

70

70

Sacrificial layer

Metallic pads

AgNWs coated with aluminium oxide

SU-8

Figure 13

Europäisches
Patentamt

European
Patent Office

Office européen
des brevets

**EUROPEAN SEARCH REPORT**

Application Number

EP 15 17 1419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/049067 A2 (PROVOST FELLOWS FOUNDATION SCHOLARS AND THE OTHER MEMBERS OF BOARD OF) 9 April 2015 (2015-04-09) | 1-11, 17-25, 27-29 | INV. B82Y30/00 G01B7/16 |
| Y | * page 3, line 16 - page 4, line 4 * <br> * page 5, line 30 - line 32 * <br> * page 7, line 4 - line 10 * <br> * page 10, line 10 - line 22 * <br> * page 19, line 20 - page 20, line 12 * <br> * figure 2 * | 12-16,26 | |
| Y | WO 2013/045936 A1 (CAMBRIDGE ENTPR LTD [GB]) 4 April 2013 (2013-04-04) <br> * page 1, line 6 - line 9 * <br> * page 15, line 31 - page 21, line 20 * <br> * figure 8A * | 12-15,26 | |
| Y | TAKEO YAMADA ET AL: "A stretchable carbon nanotube strain sensor for human-motion detection", <br> NATURE NANOTECHNOLOGY, <br> vol. 6, no. 5, 27 March 2011 (2011-03-27), pages 296-301, XP055229600, <br> GB <br> ISSN: 1748-3387, DOI: 10.1038/nnano.2011.36 <br> * abstract * <br> * Section: Carbon nanotube film strain sensor; page 296 * <br> * Secion: Fracturing mechanism of carbon nanotube film; page 299 * <br> * Section: Repeated loading-unloading cycle properties; page 299 * <br> * figures 1,2 * | 16 | TECHNICAL FIELDS SEARCHED (IPC) <br><br> B82Y <br> G01L <br> G01B |

The present search report has been drawn up for all claims

| Place of search | Date of completion of the search | Examiner |
|---|---|---|
| The Hague | 19 November 2015 | Kaiser, Jean-Luc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 15 17 1419

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2015

| Patent document cited in search report | | Publication date | Patent family member(s) | | Publication date |
|---|---|---|---|---|---|
| WO 2015049067 | A2 | 09-04-2015 | NONE | | |
| WO 2013045936 | A1 | 04-04-2013 | EP | 2761627 A1 | 06-08-2014 |
| | | | US | 2014231118 A1 | 21-08-2014 |
| | | | WO | 2013045936 A1 | 04-04-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIEN, CAO ; WANG, QIAN ; DAI, HONGJIE.** Electromechanical properties of metallic, quasi-metallic, and semiconducting carbon nano-tubes under stretching. *Physical review letters,* 2003, vol. 90.15, 157601

- **MICHAUD, HADRIEN O. ; TEIXIDOR, JOAN ; LACOUR, STÉPHANIE P.** Soft metal constructs for large strain sensor membrane. *Smart Materials and Structures,* 2015, vol. 24.3, 035020